# EUROPÄISCHE PATENTANMELDUNG

(11) **EP 1 380 733 A2**
(43) Veröffentlichungstag der Anmeldung: **14.01.2004**
(21) Anmeldenummer: 03015420.7
(22) Anmeldetag: 09.07.2003
(51) Int. Cl.: F01N 3/20

(54) **Einrichtung zur Abgasnachbehandlung von Kraftfahrzeugen, insbesondere Dieselkraftfahrzeugen**

(30) Priorität: 11.07.2002 DE 10231216
(71) Anmelder: HYDRAULIK-RING GMBH, 97828 Marktheidenfeld (DE)
(72) Erfinder: Maisch, Dieter, 72664 Kohlberg (DE)
(74) Vertreter: Jackisch-Kohl, Anna-Katharina

(57) **Zusammenfassung**

Die Einrichtung (1) hat eine Pumpvorrichtung (3) zur Zuführung einer Lösung zu einem Abgasstrang (2). Um mit der Einrichtung (1) auf konstruktiv einfache und kostengünstige Weise eine sehr hohe Dosiergenauigkeit der zur Reduzierung der Stickoxidemission erforderlichen Zugabe der Harnstoffwasserstofflösung oder einer anderen Flüssigkeit zu erreichen, ist die Pumpvorrichtung (3) als Dosierpumpe ausgebildet. Sie weist ein Anschlußteil (15) auf, das in den Abgasstrang (2) mündet. Die Pumpvorrichtung (3) hat einen Kolben (6), der über ein Piezoelement (4) betätigbar ist. Die Einrichtung (1) wird bei Diesel- und Verbrennungsmotoren eingesetzt.

## Beschreibung

Die Erfindung betrifft eine Einrichtung zur Abgasnachbehandlung von Kraftfahrzeugen, insbesondere Dieselkraftfahrzeugen nach dem Oberbegriff des Anspruches 1.

Für die Abgasnachbehandlung in Dieselverbrennungsmotoren, vorzugsweise in Lastkraftwagen und Personenkraftwagen, wird eine erhebliche Reduzierung der Stickoxidemission gefordert. Bisher wird über eine handelsübliche Pumpe eine erforderliche Menge an Harnstoffwasserlösung aus einem Vorratstank gefördert und unter einem bestimmten Druck über einen Filter einem Einspritzventil zugeführt. In der Zuführung kann sich zusätzlich noch ein hydraulisches Speicherelement befinden. Das Einspritzventil dosiert die gewünschte Harnstoffwasserlösungsmenge in einen Luftstrom. Dieser wird dem Fahrzeugbordnetz entnommen und über ein Abschaltventil unter einem bestimmten Druck, der über ein Druckminderventil eingestellt wird, einer Mischstrecke zugeführt. Dieser Luftstrom reißt die eingespritzte Harnstoffwasserlösung mit. Diese Emulsion wird über eine Emulgierleitung der Einspritzdüse am Abgasstrang zugeführt und dort vor einem SCR (selective catalytic reduction)-Katalysator in den Abgasstrahl eingedüst. Die so zudosierte Menge an Harnstoffwasserlösung muß durch das Einspritzventil in Abhängigkeit vom jeweiligen Fahrzeugzustand in einer hochgenau dosierten Menge zugegeben werden. Mit solchen Einspritzventilen sind derartig hochgenaue Dosierungen nur sehr schwer zu erreichen. Außerdem lassen sich diese genauen Dosierungen über lange Zeit nicht sicher gewährleisten.

Der Erfindung liegt die Aufgabe zugrunde, eine Einrichtung dieser Art so auszubilden, daß mit ihr auf konstruktiv einfache und kostengünstige Weise eine sehr hohe Dosiergenauigkeit der zur Reduzierung der Stickoxidemission erforderlichen Zugabe der Harnstoffwasserlösung oder einer anderen Flüssigkeit erreicht werden kann.

Diese Aufgabe wird bei einer Einrichtung der gattungsbildenden Art erfindungsgemäß mit den kennzeichnenden Merkmalen des Anspruches 1 gelöst.

Infolge der erfindungsgemäßen Ausbildung wird die Pumpeinrichtung direkt über das Anschlußteil am Abgasrohr angebracht und die Harnstoffwasserlösung oder eine andere Flüssigkeit dem Katalysator in das Abgas direkt eingespritzt. Durch die Verwendung einer Piezopumpeinrichtung wird die Flüssigkeit über einen Saugfilter direkt aus einem Vorratsbehälter gefördert und äußerst genau dem Abgas zudosiert. Das verwendete Piezoelement kann mit einer Frequenz von 0 bis mehreren hundert Hertz stufenlos angesteuert werden, so daß der Kolben mit der vorgegebenen Frequenz hin- und herbewegt wird. Da pro Hub nur eine sehr geringe Menge an Flüssigkeit gefördert wird, erreicht die Pumpvorrichtung diese hohe Dosiergenauigkeit problemlos. Das Piezoelement und der Kolben sind konstruktiv einfache Teile, die sich kostengünstig herstellen lassen. Die erfindungsgemäße Einrichtung übernimmt sowohl die Funktion einer Pumpe als auch eines Einspritzventils; bei dieser Einrichtung wird auch keine Luft benötigt, so daß mit der erfindungsgemäßen Einrichtung die Stickoxidemission bei Dieselverbrennungsmotoren auf einfache Weise wesentlich reduziert werden kann.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: im Axialschnitt eine erfindungsgemäße Einrichtung zur Abgasnachbehandlung mit einem Anschlußteil, das in ein Abgasrohr mündet und mit mindestens einem Piezoelement in verlängerter Lage,
- Fig. 2: die Einrichtung nach Fig. 1 ohne das Abgasrohr mit dem Piezoelement in seiner Ausgangslage.

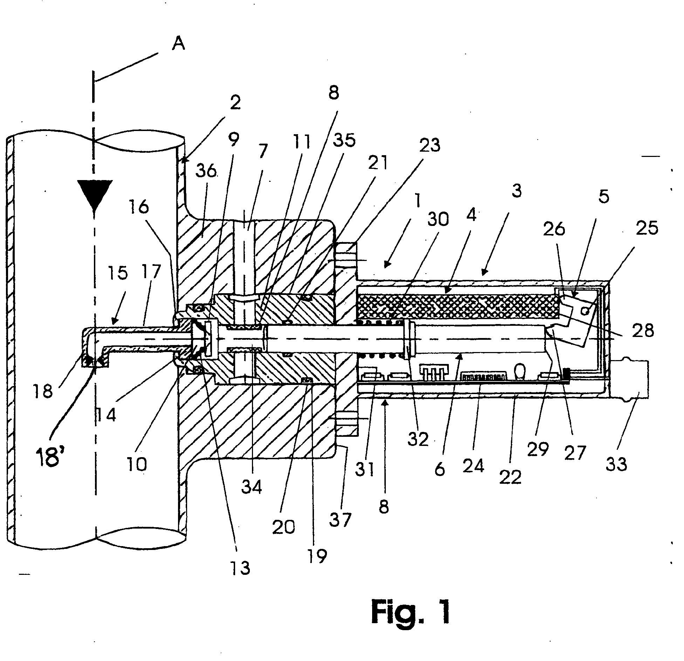

Fig. 1 zeigt eine Abgasnachbehandlungseinrichtung 1, die an ein Abgasrohr 2 eines Kraftfahrzeuges, vorzugsweise eines Dieselkraftfahrzeuges, angeschlossen ist. Mit der Einrichtung wird direkt in das Abgasrohr 2 eine Harnstoffwasserlösung eingespritzt, um in bekannter Weise die Stickoxidemission zu reduzieren. Die Einrichtung 1 weist eine Pumpvorrichtung 3 auf, die mit wenigstens einem Piezoelement 4 versehen ist, das über ein Übersetzungselement 5 einen Kolben 6 bewegt. Er ist in einer zentralen Bohrung 12 eines Gehäuses 11 verschiebbar gelagert.

In die Bohrung 12 mündet radial eine Zuführung 7, durch die die Harnstoffwasserlösung aus einem Vorratsbehälter zugeführt wird. Die Zuführung 7 ist gegenüber der Bohrung 12 durch ein Rückschlagventil 8 verschließbar. Im Ausführungsbeispiel ist das Rückschlagventil 8 durch ein Blechband gebildet, das in Schließstellung über seinen Umfang unter Vorspannung an der Bohrungswand anliegt und die Zuführung 7 gegenüber der Bohrung 12 verschließt. Das Rückschlagventil 8 kann aber auch hülsenförmig ausgebildet oder eine andere Form haben oder auch aus einem anderen Material hergestellt sein, sofern durch diese Ausbildung und das entsprechende Material sichergestellt ist, daß das Rückschlagventil 8 eine hochfrequente Rückschlagfunktion hat. Die Bohrung 12 mündet in einen Boden einer stirnseitigen Gehäuseöffnung 10. In ihr ist eine Druckfeder 13 angeordnet, die ein Rückschlagventil 9 in Schließstellung hält. Die Druckfeder 13 liegt auf der vom Kolbenschieber 6 abgewandten Seite an einem radial nach außen gerichteten Endbund 14 eines Anschlußteiles 15 an, mit dem die Abgasnachbehandlungseinrichtung 1 in das Abgasrohr 2 mündet. Der Bund 14 liegt an einem vorzugsweise umgebördelten vorstehenden Rand 16 des Gehäuses 11 an. Durch die vom Rand 16 begrenzte Öffnung ragt das L-förmige und als Rohr ausgebildete Anschlußteil 15 mit seinem längeren Schenkel 17. Er liegt koaxial zum Kolben 6 und erstreckt sich bis zur Längsachse A des Abgasrohres 2, wo es in den kürzeren Rohrschenkel 18 übergeht, dessen Achse mit der Längsachse A zusammenfällt. Im Rohrschenkel 18 ist eine Düse 18' angeordnet, über die die Harnstoffwasserlösung in das Abgasrohr 2 eingedüst wird.

Das Gehäuse 1 ist außen mit einer umlaufenden Vertiefung 19 versehen, in der eine Ringdichtung 20 liegt. Die Pumpvorrichtung 3 wird mit dem Gehäuse 11 in einen Einbauraum 35 einer Aufnahme 36 am Abgasrohr 2 eingesetzt, wobei die Dichtung 20 dichtend an der Innenwandung des Einbauraumes 35 anliegt.

In der Innenwandung der Bohrung 12 ist mindestens eine Ringdichtung 21 zur Abdichtung des Kolbens 6 eingesetzt. Er ragt in einen Gehäuseteil 22, der mit einem Flansch 23 an das Gehäuse 11 anschließt. Die Pumpvorrichtung 3 wird so weit in den Einbauraum 35 der Aufnahme 36 eingesetzt, bis der Flansch 23, der radial über das Gehäuse 11 und den Gehäuseteil 22 vorsteht, an einer Stirnseite 37 der Aufnahme 36 zur Anlage kommt. Die Aufnahme 36 ist ein radialer Stutzen des Abgasrohres 2. An der Stirnseite 37 wird der Flansch 23 mit Schrauben und dgl. befestigt.

Im Gehäuseteil 22 ist ein Piezoelement 4 als Betätigungsteil untergebracht. Selbstverständlich können auch weitere Betätigungselemente vorgesehen sein. Das Piezoelement 4 ist länglich ausgebildet und an eine Betätigungselektronik 24 angeschlossen, die im Gehäuseteil 22 vorgesehen ist. Das Piezoelement 4 liegt parallel zum Kolben 6, der sich bis in den Gehäuseteil 22 erstreckt. Die Bewegung des Piezoelementes 4 wird über das Übersetzungselement 5 auf den Kolben 6 übertragen. Es ist als zweiarmiger Hebel ausgebildet, der um eine senkrecht zum Piezoelement 4 und zum Kolben 6 liegende Achse 25 schwenkbar ist. Das Übersetzungselement 5 hat zwei parallel zueinander liegende Arme 26 und 27, die sich senkrecht zur Schwenkachse 25 erstrecken und an den Stirnseiten 28 und 29 des Piezoelementes 4 und des Kolbens 6 anliegen. Durch Schwenken des Stellgliedes 5 um die Achse 25 wird der Kolben 6 in der entsprechenden Richtung verschoben.

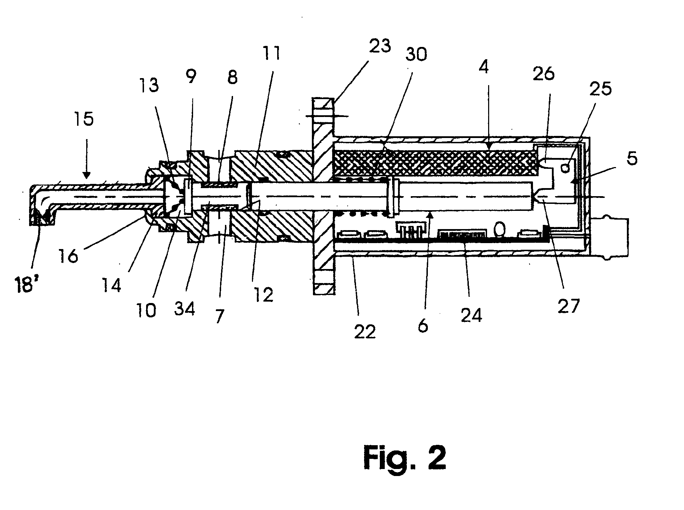

Der Kolben 6 ist in Richtung auf das Übersetzungselement 5 durch mindestens einer Druckfeder 30 belastet, die sich mit ihrem einen Ende an einer in Höhe des Flansches 23 liegenden Stirnwand 31 des Gehäuseteiles 23 und mit ihrem anderen Ende an einem Bund 32 des Kolbens 6 abstützt. Wird das Piezoelement 4 bestromt, dehnt es sich aus, so daß das Übersetzungselement 5 im Uhrzeigersinn um die Achse 25 geschwenkt wird (Fig. 1). Der Kolben 6 wird durch den Arm 27 des Übersetzungselement 5 gegen die Kraft der Druckfeder 30 verschoben. Der Kolben 6 liegt stets unter der Kraft der Druckfeder 30 am Arm 27 an. Wird das Piezoelement 4 nicht erregt, verkürzt es sich wieder. Das Übersetzungselement 5 wird unter der Kraft der Druckfeder 30 durch den Kolben 6 entgegen dem Uhrzeigersinn um die Achse 25 zurückgeschwenkt (Fig. 2).

Die freien Enden der Arme 26, 27 des Übersetzungselementes 5 sind schneidenförmig ausgebildet, so daß der Schwenkvorgang des Übersetzungselementes 5 die Verschiebbarkeit des Kolbens 6 nicht beeinträchtigt. Auf der Außenseite des Gehäuseteiles 22 ist ein Anschluß 33 vorgesehen, mit dem die Teile der Betätigungselektronik 24 mit Strom versorgt werden können. Die Betätigungselektronik 24 enthält einen Spannungsverstärker sowie eine Regelelektronik. Die Betätigungselektronik 24 kann auch separat außerhalb der Pumpeinrichtung 3 vorgesehen sein.

In der Ausgangsstellung (Fig. 2) ist das Piezoelement 4 nicht erregt, so daß der Kolben 6 seine zurückgezogene Stellung einnimmt. Der Kolben liegt unter der Kraft der Druckfeder 30 am Arm 27 des Übersetzungselementes 5 an, das mit seinem anderen Arm 26 an der Stirnseite 28 des Piezoelementes 4 anliegt. Die beiden Rückschlagventile 8 und 9 sind hierbei geschlossen, so daß die den Kolben 6 aufnehmende Bohrung 12 von der radialen Zuführung 7 getrennt ist.

Verlängert sich das Piezoelement 4 durch entsprechende Beaufschlagung, dann wird das Übersetzungselement 5 aus der Lage gemäß Fig. 2 innerhalb kürzester Zeit um die Achse 25 im Uhrzeigersinn geschwenkt. Dadurch wird der Kolben 6 gegen die Kraft der Druckfeder 30 in den Fig. 1 und 2 nach links verschoben. Dabei wird die Harnstoffwasserlösung in dem durch die Bohrung 12, den Kolben 6 und die Rückschlagventile 8, 9 begrenzten Druckraum 34 verdichtet. Das Rückschlagventil 8 wird infolge des Druckaufbaus geschlossen, so daß die Bohrung 12 von der Zuführung 7 getrennt wird. Sobald der Druck im Raum 34 größer wird als die auf das Rückschlagventil 9 wirkende Kraft der Druckfeder 13 sowie der im Raum 10 wirkende Systemdruck, wird das Rückschlagventil 9 geöffnet, so daß die unter Druck stehende Harnstoffwasserlösung über die Öffnung 10 in das Anschlußrohr 15 und von diesem in das Abgasrohr 2 strömen kann.

Durch die beschriebene Verkürzung und Verlängerung des Piezoelementes 4 wird der Kolben 6 in der beschriebenen Weise in der Bohrung 12 hin- und hergeschoben. Wenn sich das Piezoelement 4 verlängert, bewegt sich der Kolben 6 in Richtung auf die Öffnung 10, wodurch das Druckmedium im Raum 34 verdichtet wird. Sobald der Druck im Druckmedium größer wird als die auf das Rückschlagventil 9 wirkende Kraft der Druckfeder 13, öffnet das Rückschlagventil 9. Das Druckmedium wird dann durch den Kolben 6 in der beschriebenen Weise in das Abgasrohr 2 gedrückt. Zieht sich das Piezoelement 4 zusammen, wird der Kolben 6 in der beschriebenen Weise zurückgezogen. Es entsteht im Druckraum 34 ein Unterdruck, der dazu führt, daß das Rückschlagventil 9 geschlossen und das Rückschlagventil 8 geöffnet wird. Die Harnstoffwasserlösung wird über die Zuführung 7 in den Druckraum 34 angesaugt, in dem sie in der beschriebenen Weise verdichtet wird.

Das Piezoelement 4 kann je nach angelegter Frequenz mehrere tausend mal pro Sekunde die Verkürzung und Verlängerung durchführen bzw. eine genau vorgegebene Hubzahl abarbeiten. Dadurch läßt sich mit einem theoretisch inkompressiblen Medium ein definierter Volumenstrom einstellen.

Das Piezoelement 4 kann je nach gewünschtem geometrischen Hubvolumen auch ohne das Übersetzungselement 5 unmittelbar auf den Kolben 6 einwirken. In diesem Fall ist das Piezoelement 4 vorteilhaft axial hinter dem Kolben 6 angeordnet, so daß dieser beim Verlängern und Verkürzen des Piezoelementes 4 unmittelbar von ihm entsprechend verschoben wird.

Mit der Pumpvorrichtung 3 wird die Harnstoffwasserlösung vor einem (nicht dargestellten) Katalysator, vorzugsweise einem SCR (selective catalytic reduction)-Katalysator, in das Abgas eingespritzt. Die Pumpvorrichtung 3 fördert hierbei die Harnstoffwasserlösung über einen (nicht dargestellten) Saugfilter direkt aus einem (ebenfalls nicht dargestellten) Vorratsbehälter und übernimmt hierbei die genaue Zudosierung der Harnstoffwasserlösung in das Abgasrohr 2. Dies ist dadurch möglich, daß sich die Piezokolbenpumpe 3 mit einer Frequenz von 0 bis mehreren hundert Hertz stufenlos ansteuern läßt, wodurch der Kolben 6 mit dieser vorgegebenen Frequenz hin- und herbewegt wird. Da dieser pro Hub nur eine sehr geringe Menge Harnstoffwasserlösung, oder auch eine andere Flüssigkeit, fördert, erreicht die Pumpe 3 die sehr hohe Dosiergenauigkeit problemlos. Damit die Einrichtung 1 nur wenig Einbauraum benötigt, ist die Pumpvorrichtung 3 mit dem Kolben 3 ausgebildet, der durch wenigstens das eine Piezoelement 4 bewegt bzw. verschoben wird. Das Piezoelement 4 und der Kolben 6 sind konstruktiv einfache Bauteile, die preisgünstig hergestellt werden können. Die Betätigungseinrichtung 1 übernimmt sowohl die Funktion einer Pumpe als auch die eines Einspritzventils. Da bei der Einrichtung 1 keine Luft benötigt wird, muß in die Kraftfahrzeuge, bei denen diese Einrichtung eingesetzt wird, auch kein Druckluftnetz integriert werden. Bei Lkws wird keine Druckluft verbraucht, die ohnehin nur in geringer Menge vorhanden ist.

Die beschriebene Pumpeinrichtung 3 läßt sich auch als Ersatz für bekannte Einspritzventile für Abgasnachbehandlungseinrichtungen verwenden. In diesem Fall wird eine herkömmliche Pumpe am Tank als Förderpumpe eingesetzt, für den Fall, daß die Saughöhe für die Pumpeinrichtung 3 zu groß ist. Falls das Ansaugverhalten der Pumpeinrichtung 3 selbst ausreichend ist, kann die herkömmliche Pumpe auch entfallen und ein Druckfilter wird durch einen Ansaugfilter ersetzt. Damit übernimmt die beschriebene Pumpeinrichtung 3, wie bei der zuvor beschriebenen Ausbildung, die Aufgabe, die dem Abgas zuzuführende Flüssigkeit zu fördern und gleichzeitig in der gewünschten Menge dosiert zuzuführen.

## Patentansprüche

1. Einrichtung zur Abgasnachbehandlung von Kraftfahrzeugen, insbesondere Dieselkraftfahrzeugen, mit wenigstens einer Pumpvorrichtung zur Zuführung einer Lösung zu einem Abgasstrang,
**dadurch gekennzeichnet, daß** die Pumpvorrichtung (3) als Dosierpumpe ausgebildet ist, die mindestens ein Anschlußteil (15) aufweist, das in den Abgasstrang (2) mündet, und daß die Pumpvorrichtung (3) mindestens einen Kolben (6) hat, der über wenigstens ein Piezoelement (4) betätigbar ist.

2. Einrichtung nach Anspruch 1,
**dadurch gekennzeichnet, daß** das Anschlußteil (15) rohrartig ausgebildet ist.

3. Einrichtung nach Anspruch 1 oder 2,
**dadurch gekennzeichnet, daß** das Anschlußteil (15) vorteilhaft mit einem Endbund (14) in einer vorzugsweise endseitigen Öffnung (10) eines Gehäuses (11) gehalten ist.

4. Einrichtung nach Anspruch 3,
**dadurch gekennzeichnet, daß** sich am Endbund (14) des Anschlußteiles (15) wenigstens eine Feder (13) eines Rückschlagventiles (9) abstützt, das vorteilhaft einen Druckraum (34) zur Aufnahme der Lösung gegen das Anschlußteil (15) verschließt.

5. Einrichtung nach Anspruch 3 oder 4,
**dadurch gekennzeichnet, daß** das Anschlußteil (15) als L-förmiges Rohr bzw. Düse ausgebildet ist, dessen längerer Rohrschenkel (17) den Endbund (14) aufweist und dessen kürzerer Schenkel (18) etwa koaxial zum Abgasstrang (2) verläuft.

6. Einrichtung nach einem der Ansprüche 1 bis 5,
**dadurch gekennzeichnet, daß** zwischen dem Kolben (6) und dem Piezoelement (4) ein vorteilhaft als Schwenkhebel ausgebildetes Übersetzungselement (5) vorgesehen ist.

7. Einrichtung nach Anspruch 6,
**dadurch gekennzeichnet, daß** das Übersetzungselement (5) zwei, vorzugsweise zueinander parallele Arme (26, 27) aufweist, die an Stirnseiten (28, 29) des Piezoelementes (4) und des Kolbens (6) anliegen.

8. Einrichtung nach einem der Ansprüche 1 bis 7,
**dadurch gekennzeichnet, daß** das Piezoelement (4) und der Kolben (6) parallel zueinander liegen.

9. Einrichtung nach einem der Ansprüche 6 bis 8,
**dadurch gekennzeichnet, daß** die Schwenkachse (25) des Übersetzungselementes (5) in einem die Arme (26, 27) verbindenden Steg vorgesehen ist und vorzugsweise senkrecht zur Verschieberichtung des Kolbens (6) liegt.

10. Einrichtung nach einem der Ansprüche 1 bis 9,
**dadurch gekennzeichnet, daß** das Piezoelement (4) den Kolben (6) gegen eine Gegenkraft verschiebt.

11. Einrichtung nach einem der Ansprüche 1 bis 10,
**dadurch gekennzeichnet, daß** mit dem Kolben (6) die Lösung aus einer vorteilhaft durch ein weiteres Rückschlagventil (8) verschließbaren Zuführung (7) des Gehäuses (11) der Pumpeinrichtung (3) ansaugbar ist.

12. Einrichtung nach Anspruch 11,
**dadurch gekennzeichnet, daß** das weitere Rückschlagventil (8) ein radial elastisch verformbares Metall, Blech und/oder eine Hülse ist.

13. Einrichtung nach Anspruch 11 oder 12,
**dadurch gekennzeichnet, daß** das weitere Rückschlagventil (8) unter einer beim Zurückschieben des Kolbens (6) entstehenden Saugkraft die Zuführung (7) in Richtung auf den Druckraum (34) öffnet.

14. Einrichtung nach einem der Ansprüche 4 bis 13,
**dadurch gekennzeichnet, daß** das erste Rückschlagventil (9) unter einer beim Verschieben des Kolbens (6) entstehenden Druckkraft in Richtung auf das Anschlußteil (15) öffnet.

15. Einrichtung nach einem der Ansprüche 1 bis 14,
**dadurch gekennzeichnet, daß** im Gehäuse (11) der Pumpeinrichtung (3) eine Betätigungselektronik (24) für das Piezoelement (4) vorgesehen ist.

16. Einrichtung nach einem der Ansprüche 1 bis 15,
**dadurch gekennzeichnet, daß** an dem vorteilhaft einen Montageflansch (23) aufweisenden Gehäuse (1) ein elektronischer Anschluß (33) vorgesehen ist.

17. Einrichtung nach einem der Ansprüche 1 bis 16,
**dadurch gekennzeichnet, daß** das Piezoelement (4) und die vorteilhaft außerhalb des Gehäuses vorgesehene Betätigungselektronik (24) auf einander gegenüberliegenden Seiten des Kolbens (6) vorgesehen sind.
